# EUROPÄISCHE PATENTSCHRIFT

(11) **EP 2 761 793 B1**
(45) Veröffentlichungstag und Bekanntmachung des Hinweises auf die Patenterteilung: **27.07.2016**
(21) Anmeldenummer: 12772873.1
(22) Anmeldetag: 12.09.2012
(51) Int. Cl.: H04J 1/05, G06F 13/40

(54) **BUSSYSTEM**
BUS SYSTEM
SYSTÈME DE BUS

(30) Priorität: 29.09.2011 DE 102011114527
(43) Veröffentlichungstag der Anmeldung: 06.08.2014
(73) Patentinhaber: Airbus Defence and Space GmbH, 85521 Ottobrunn (DE)
(72) Erfinder: HELLER, Christoph, 82024 Taufkirchen (DE); SCHALK, Josef, 84051 Altheim (DE)
(74) Vertreter: Rasch, Michael
(86) Internationale Anmeldenummer: PCT/DE2012/100275
(87) Internationale Veröffentlichungsnummer: WO 2013/044908

(56) Entgegenhaltungen:
- DE-A1-102009 009 663
- US-A- 6 141 351
- US-A1- 2003 101 306

## Beschreibung

Die Erfindung betrifft ein Bussystem zur Verbindung mehrerer Datenverarbeitungseinheiten über einen aus zwei Signalleitungen bestehenden Bus gemäß dem Oberbegriff von Anspruch 1.

Ein solches Bussystem ist aus der US 6 141 351 A bekannt.

Bisher werden Datenverarbeitungseinheiten hauptsächlich über digitale Bussysteme miteinander gekoppelt, wobei standardisierte Protokolle wie Ethernet (IEEE 802.3) Verwendung finden, auf deren Basis Netzwerkprotokolle wie TCP/IP o.ä. zum Einsatz kommen. Ethernet-Verbindungen mit Datenraten von 100 Mbit/s sind gegenwärtig sehr verbreitet aufgrund der hohen Datenrate, der geringen Kosten und der Robustheit des Systems. Nachteilig ist der Umstand, dass zwei getrennte Drahtpaare für die Übertragung und den Empfang von Daten erforderlich sind, was das Leitungsgewicht gegenüber anderen Protokollen wie ARINC-429 oder MIL-STD-1553 oder CAN, die mit einem Drahtpaar auskommen, verdoppelt. Ein anderer wesentlicher Nachteil besteht darin, dass nur Punkt-zu-Punkt-Verbindungen möglich sind und zum Aufbau eines Netzwerkes mit mehreren Teilnehmern aktive Koppler wie sog. Hubs oder Switches nötig sind. Wenn Ethernet in einer determinierten Weise mit garantierten Bandbreiten bzw. garantierten Maximalverzögerungen betrieben werden soll, sind komplexe Protokolle erforderlich, die den Medienzugriff steuern (sog. MAC-Protokolle). Diese basieren entweder auf einem TDMA-Prinzip (time division multplie access) oder erfordern komplexe prioritätsgesteuerte Puffer- und Übertragungsratenbeschränkungskonzepte.

Hiervon ausgehend liegt der Erfindung die Aufgabe zugrunde, ein Bussystem mit FDMA Architektur so bereitzustellen, dass eine einfache Verwendung bestehender Kommunikatonsprotokolle ermöglicht wird..

Die Erfindung ergibt sich aus den Merkmalen des unabhängigen Anspruchs. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Die Aufgabe wird dadurch gelöst, dass
jeder Datenverarbeitungseinheit ein Frequenzband mit einer Mittenfrequenz zugewiesen ist, und die Modemeinheit folgende Bestandteile aufweist:
- eine Schnittstelleneinheit, die mit der Datenverarbeitungseinheit verbindbar ist und mittels eines digitalen Kommunikationsprotokolls (z.B. IEEE 802.3) mit dieser kommuniziert;
- eine Schmalband-Modulationseinheit, die den Nutzdatenstrom in ein Signal umwandelt, welches über die Frequenzbänder übertragbar ist;
- eine Filterbank-Syntheseeinheit, welche als Polyphasen-Filterbank die Daten der Schnittstelleneinheit auf die der Datenverarbeitungseinheit zugeordnete Mittenfrequenz konvertiert und Interferenzen zwischen benachbarten Frequenzbändern unterdrückt;
- einen Digital-Analog-Wandler, der das Signal der Filterbank-Syntheseeinheit in ein analoges Signal umwandelt;
- eine Buskoppeleinheit, um galvanisch isoliert das zu übertragene Signal des Digital-Analog-Wandlers in den Bus einzukoppeln und empfangene Signale des Busses auszukoppeln;
- einen Analog-Digital-Wandler, welcher die empfangenen Bussignale aus der Buskoppeleinheit digitalisiert;
- eine Filterbank-Analyseeinheit, welche als Polyphasen-Filterbank die digitalisierten Bussignale in die einzelnen Frequenzbänder aufteilt und die den einzelnen Frequenzbändern zugeordneten Daten der Schnittstelleneinheit zuführt.
- eine Schmalband-Demodulationseinheit, die den Datenstrom der Filterbank-Analyseeinheit demoduliert und die Nutzdaten der Schnittstelleneinheit zuführt.

Die Erfindung ist dadurch gekennzeichnet, dass digitale Datenverarbeitungstechniken zur Aufteilung des Netzwerkes in mehrere virtuelle und unabhängige Verbindungen in der Frequenzdomäne verwendet werden. Signale können auf jeder der virtuellen Verbindungen ohne Beeinflussung der Übertragungen zwischen anderen Verbindungen übertragen werden. Dabei kann die Netzwerktechnologie eine simple passive Buskonstruktion sein, die aus einem Drahtpaar (twisted pair) ohne aktive Komponenten zwischen den Komponenten, also der Datenverarbeitungseinheit, besteht. Dabei können sowohl direkte Punkt-zu-Punkt-Verbindungen (PP) als auch Punkt-zu-Mehrpunkt-Verbindungen realisiert werden indem verschiedene nicht überlappende Frequenzbänder für die Übertragung eines jeden Knotens zugeordnet werden. Unter Datenverarbeitungseinheiten werden alle Arten von Geräten verstanden, die miteinander einen Datenaustausch vornehmen, beispielsweise Computer, Aktuatoren, Sensoren, Regler etc.

Die physikalische Schicht wird dabei so effizient wie möglich verwirklicht, um die Hardwarekosten zu minimieren. Auf der oberen Ebene ist dieses kompatibel zu einem gängigen Protokoll, insbesondere dem Fast Ethernet Protokoll, um eine einfache Systemmigration zu ermöglichen. Als physikalische Schicht basiert die erfindungsgemäße Lösung auf galvanisch getrennten Netzwerkschnittstellen, so dass diese auch mit kohlefaserverstärkten Kunststoff-Strukturen (CFRP) moderner Luftfahrzeuge verwendbar ist.

Dabei basiert das erfindungsgemäße Frequenzmultiplexverfahren (frequency division multiple access; FDMA) auf der gleichzeitigen Übertragung mehrerer schmalbandiger Signale auf verschiedenen Frequenzen in einem Twisted-Pair-Kabel (Kabel mit verdrillten Aderpaaren). Dazu wird die verfügbare Bandbreite des Twisted-Pair-Kabel in einen Satz unabhängiger, nicht überlappender Frequenzbänder geteilt, welche die individuellen Datenströme übertragen. Bei einem in der Luftfahrtechnik für CAN-Bussysteme verwendeten typischen Kabeltyp (WX26) ergibt sich beispielsweise für eine Kabellänge von 60m für einen bei -3 dB-Signalabfall eine Bandbreite von ca. 10 MHz. Kürzere Kabel haben deutlich höhere -3 dB-Bandbreiten. Diese Bandbreite (also im bevorzugten Beispiel von 10 MHz) wird in einen Satz von - vorzugsweise 8 - Unterbändern aufgeteilt, vorzugsweise mit einem gleichmäßigen Mittenabstand von 1,25 MHz.

Die Daten von jeder Datenverarbeitungseinheit werden einer Polyphasenfilterbank zugeführt, die eine Fast-Fourier-Transformations-Einheit (FFT) sowie einen Tiefpassfilter umfasst. Die Polyphasenfilterbank besteht aus einer Synthesefilterbank, welche die Übertragungsfunktionalität umfasst sowie eine Analysenfilterbank für die Empfängerfunktionalität. Die Datenverarbeitung erfolgt mit einer Abtastrate von 20 MHz so dass Signale bis zur Kabelbandbreite von 10 MHz bearbeitet werden können. Es erfolgt eine 32-Punkt IFFT/FFT, welche die 20 MHz in 32 Bänder teilen würde, wobei die oberen 16 nicht verwendet werden und von den 16 unteren Bändern nur jedes zweite benutzt wird, um den Abstand zwischen benutzen Bändern zu vergrößern und damit Störungen zu minimieren.

Gemäß einer vorteilhaften Weiterbildung der Erfindung ist zwischen dem Digital-Analog-Wandler und der Buskoppeleinheit ein erster analoger Tiefpassfiller angeordnet. Hierdurch werden elektromagnetische Emissionen des Bussystems auf Nachbarsysteme reduziert.

Gemäß einer vorteilhaften Weiterbildung der Erfindung ist zwischen der Buskoppeleinheit und dem Analog-Digital-Wandler ein zweiter analoger Tiefpassfilter angeordnet. Hierdurch wird das Empfangssignal derart bandbegrenzt, dass keine Aliaseffekte durch die zeitliche Abtastung des AD-Wandlers entstehen.

Gemäß einer vorteilhaften Weiterbildung der Erfindung ist übertragungsseitig der Buskoppeleinheit eine Treibereinheit vorgeschaltet, um ein genügend starkes Signal induktiv oder kapazitiv in die Busleitung einzukoppeln.

Gemäß einer vorteilhaften Weiterbildung der Erfindung erfolgt die Datenkodierung in der Schmalbandmodulationseinheit mittels Quadratur-Amplitudenmodulation, so dass mit jedem übertragenen Symbol mehrere Datenbits übertragen werden können.

Gemäß einer vorteilhaften Weiterbildung der Erfindung ist das digitale Kommunikationsprotokoll IEEE 802.3 (Ethernet), ARINC-429, MIL-STD-1553 oder CAN. Mittels dieser gängigen Protokolle kann das erfindungsgemäße System mit herkömmlichen Datenverarbeitungsgeräten gekoppelt werden, deren Schnittstellen nach einem dieser Protokolle arbeiten.

Gemäß einer vorteilhaften Weiterbildung der Erfindung sind 8 Frequenzbänder mit Mittenfrequenzen von n * 0,625 MHz (n = 1..7) vorgesehen. Dies ist besonders bei der Verwendung von Kabeln des Typs WX26 von Vorteil, um 8 verschiedene Datenverarbeitungsgeräte miteinander zu verbinden.

Gemäß einer vorteilhaften Weiterbildung der Erfindung ist die galvanische Kopplung in der Buskoppeleinheit induktiv ausgeführt. Dies ist baulich einfach und ermöglicht einen hohen Wirkungsgrad der Übertragung.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung. Gleiche, ähnliche und/oder funktionsgleiche Teile sind mit gleichen Bezugszeichen versehen.

Es zeigen:
- Figur 1:: eine schematische Netzwerkdarstellung gemäß der Erfindung;
- Figur 2:: eine schematische Frequenzdomänendarstellung des Datenverkehrs gemäß Figur 1;
- Figur 3: ein Blockschaltbild der in einem Knoten vorhandenen Komponenten;
- Figur 4: das System für eine Anordnung mit zwei Knoten;
- Figur 5: die Signale von acht unabhängigen NRZ-Datenströmen.
- Figur 6: das Gesamtspektrum bei der Übertragung von 8 Datenströmen

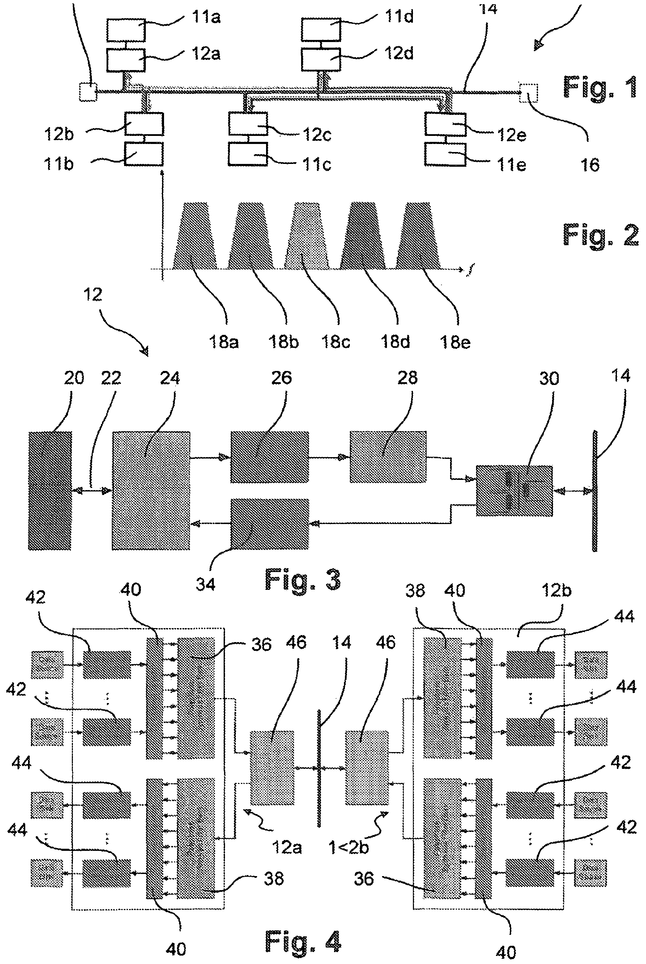

In **Figur 1** ist schematisch eine Netzwerkdarstellung des erfindungsgemäßen Bussystems 10 dargestellt, das aus mehreren Datenverarbeitungsgeräten 11a - 12d besteht, die über Schnittstelleneinheiten 12a - 12d an einer zweidrahtigen Leitung 14 angeschlossen sind. Die Leitung 14 wird beidendig durch Terminalstücke 16 mit der charakteristischen Kabelimpedanz abgeschlossen. Durch unterschiedliche Grauschattierungen wird der Datenverkehr auf der Leitung 14 zwischen den einzelnen Schnittstelleneinheiten 12a - 12d dargestellt.

In **Figur 2** ist der Datenverkehr auf der Leitung 14 in der Frequenzdomäne dargestellt, wobei erkennbar ist, dass die Kommunikation jeweils zwischen unterschiedlichen Knoten in unterschiedlichen Frequenzbändern 18a - 18d erfolgt. So erfolgt beispielsweise die Kommunikation zwischen den Knoten 12c und 12d im Frequenzband 18a, zwischen den Knoten 12a und 12b im Frequenzband 18b und so weiter.

**Figur 3** ist ein Blockschaltbild der in einer Schnittstelleneinheit 12 vorhandenen Komponenten. Ein Datenverarbeitungsgerät 20 ist über eine digitale Verbindung 22, vorzugsweise gemäß dem Ethernet-Protokoll mit einer Signalprozessoreinheit 24 verbunden, die vorzugsweise als sog. FPGA (Anwendungsfeld-programmierbare Gatter-Anordnung) ausgeführt ist, in der alle digitalen Signalverarbeitungsschritte für das schmalbandige Übertragen und Empfangen sowie die Kanalisierung unter Verwendung der Polyphasen-filterbank erfolgen. Das Übertragungssignal der Signalprozessoreinheit 24 wird einem Digital-Analogwandler 26 zugeführt, der das digitale Signal in ein analoges Signal umwandelt. Der Digital-Analog-Wandler 26 kann bei der robusten schmalbandigen Übertragung eine Auflösung von 8 bis 10 Bit aufweisen. Ein Treiberverstärker 28 verstärkt das zu übertragende Signal und führt es einer Buskoppeleinheit 30 zu, die induktiv mit der Leitung 14 gekoppelt ist. Alternativ kann die Kopplung auch kapazitiv erfolgen. Ein nicht gezeigter einfacher analoger Tiefpassfilter kann zwischen Digital-Analog-Wandler 26 und Treiberverstärker 28, sowie zwischen Buskoppeleinheit 30 und Analog-Digital-Wandler 34 vorgesehen sein, um Aliasing-Effekte zu verhindern und das Signal zu glätten. Die galvanische Trennung durch die Buskoppeleinheit 30 ist wichtig, um eine Robustheit gegen Blitzeinschläge zu erzielen und das System geeignet zu machen für den Einbau in Luftfahrzeugen aus kohlefaserverstärkten Kunststoffen (CFRP).

Im Empfangszweig wird das Signal aus der Leitung 14 über einen Analog-Digital-Wandler 34 der Signalprozessoreinheit zugeführt, der die umgekehrte Signalverarbeitung für den Übertragungszweig ausführt.

In **Figur 4** ist das System für eine Anordnung mit zwei Schnittstelleneinheiten 12a, 12b im Einzelnen dargestellt. Jede Schnittstelleneinheit umfasst eine Synthese-Filterbank 36 für die Datenübertragung und eine Analyse-Filterbank 38 für den Datenempfang. Beide Filterbänke weisen eine Polyphasenarchitektur auf. Ein Kanalselektionsblock 40 selektiert für jede Schnittstelleneinheit den Frequenzdomänenkanal, auf dem gesendet wird sowie den Unterkanal, auf dem Daten empfangen werden. Für beide Richtungen ist es möglich, einer Schnittstelleneinheit (einem Knoten) mehrere Kanäle zuzuordnen. Um Kollisionen im Netzwerk zu verhindern sollte jeder Kanal nur einem Knoten als Übertragungskanal zugeordnet sein, während mehrere Knoten Daten aus dem gleichen Kanal erhalten können. Dieses System ermöglicht den Aufbau von Punkt-zu-Mehrpunkt-Kanälen für das ARINC-429 oder das AFDX-Protokoll. Schmalband-Sender 42 und Schmalband-Empfänger 44 arbeiten vorzugsweise gemäß der Non-Return-To-Zero (NRZ) Kodierung mit einer Abtastrate von 20 MHz / 32 = 625 kHz. Mittels der NRZ-Kodierung kann eine Bitrate von 625 kBit/s auf jedem Unterkanal erzielt werden bzw. eine gesamte Datenrate von 8 x 625 kBit/s, also 5 Mbit/s. Bei der NRZ-Kodierung kann nicht die gesamte Bandbreite des NRZ-Signals übertragen werden, aber die übertragbare Bandbreite reicht aus, um das Signal zu dekodieren. In die Figur 3 mit den Bezugszeichen 24, 26, 28, 30, 34 bezeichneten Einheiten sind in den Blöcken 46 von Figur 4 integriert.

Alternativ kann eine andere Kodierung verwendet werden, so insbesondere Quadratur-amplitudenmodulation (QAM), weiche den Vorteil hat, dass mehrere Datenbits pro Symbol übertragen werden können. Vorteilhaft wäre der Einsatz einer 16-QAM, welche 4 Datenbits pro Symbol überträgt, da hiermit pro Symbol ein IEEE 802.3 Media-Independent-Interface-Datenblock (MII) übertragen werden kann.

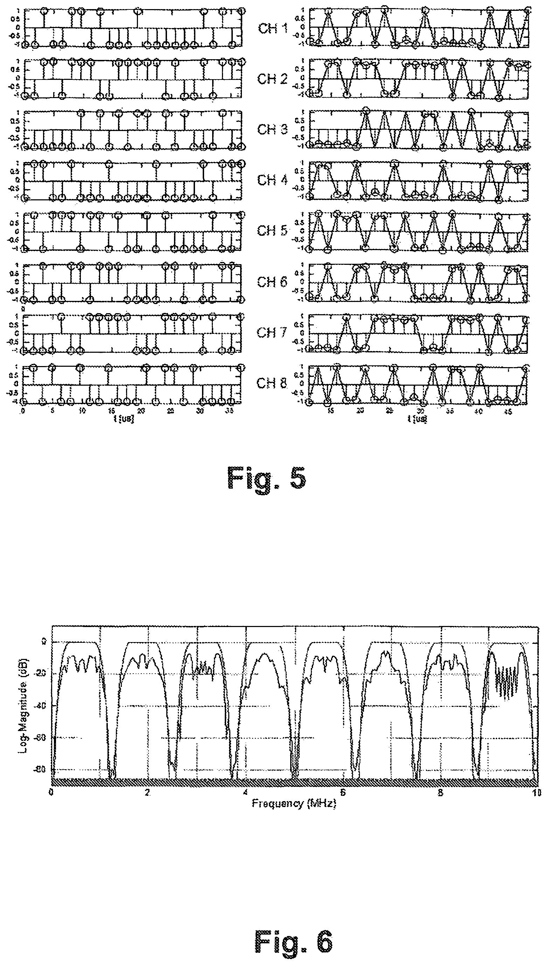

In **Figur 5** sind die Signale von acht unabhängigen NRZ-Datenströmen dargestellt, die von einem Knoten übertragen und einem anderen Knoten empfangen wurden. Links sind die übertragungsseitigen Signale und rechts die empfangsseiligen Signale für die acht Kanäle für zufällige Bitfolgen dargestellt. Es ist ersichtlich, dass sich die Datenströme nicht gegenseitig stören und korrekt vom Empfänger dekodiert werden können. Dabei ist erkennbar, dass nach einer Schwellwertentscheidung alle Bitwerte korrekt ankommen und lediglich eine Verzögerung von acht Abtastungen auftritt sowie eine geringe Amplitudenverzerrung aufgrund von Zwischen-Symbol-Interferenzen, nachdem die Bandbreite der Unterkanäle geringfügig kleiner ist als die Bandbreite des NRZ-Datenstroms.

In **Figur 6** ist das analoge Signalspektrum bei einer Datenrate von 625 kBit/s auf jedem Unterkanal zusammen mit den Filterbankcharakteristiken im Frequenzdomänenspektrum dargestellt. Dabei ist zu erkennen, dass dieses aus acht Unterbandsignalen besteht, die perfekt den Filterbankcharakteristiken entsprechen.

### Bezugszeichenliste

- 10: Bussystem
- 11: Datenverarbeitungsgerät
- 12: Schnittstelleneinheit
- 14: Leitung
- 16: Terminalstück
- 18: Frequenzband
- 20: Datenverarbeitungsgerät
- 22: Verbindung
- 24: Signalprozessoreinheit
- 26: D/A-Wandler
- 28: Treiberverstärker
- 30: Buskoppeleinheit
- 34: Analog-Digital-Wandler
- 36: Synthese-Filterbank
- 38: Analyse-Filterbank
- 40: Kanalselektionsblock
- 42: Schmalband-Sender
- 44: Schmalband-Empfänger
- 46: Block

## Patentansprüche

1. Bussystem (10) zur Verbindung mehrerer Datenverarbeitungseinheiten (20) über einen aus zwei Signalleitungen bestehenden Bus (14), wobei
- der Bus (14) mit Analogsignalen beaufschlagt ist, die innerhalb mehrerer nicht überlappender Frequenzbänder (18) liegen;
- jede Datenverarbeitungseinheit (20) über eine Modemeinheit (12) mit dem Bus (14) gekoppelt ist,
**dadurch gekennzeichnet, dass** jeder Datenverarbeitungseinheit (20) ein Frequenzband (18) mit einer Mittenfrequenz zugewiesen ist, und die Modemeinheit (12) folgende Bestandteile aufweist:
- eine Schnittstelleneinheit (24), die mit der Datenverarbeitungseinheit (20) verbindbar ist und mittels eines digitalen Kommunikationsprotokolls (z.B. IEEE 802.3) mit dieser kommuniziert;
- eine Schmalband-Modulationseinheit (42), die den Nutzdatenstrom in ein Signal umwandelt, welches über die Frequenzbänder (18) übertragbar ist;
- eine Filterbank-Syntheseeinheit (36), welche als Polyphasen-Filterbank die Daten der Schnittstelleneinheit (24) auf die der Datenverarbeitungseinheit (20) zugeordnete Mittenfrequenz konvertiert und Interferenzen zwischen benachbarten Frequenzbändern unterdrückt;
- einen Digital-Analog-Wandler (26), der das Signal der Filterbank-Syntheseeinheit (36) in ein analoges Signal umwandelt;
- eine Buskoppeleinheit (30), um galvanisch isoliert das zu übertragende Signal des Digital-Analog-Wandlers (26) in den Bus (14) einzukoppeln und empfangene Signale des Busses (14) auszukoppeln;
- einen Analog-Digital-Wandler (34), welcher die empfangenen Bussignale aus der Buskoppeleinheit (30) digitalisiert;
- eine Filterbank-Analyseeinheit (38, 40), welche als Polyphasen-Filterbank die digitalisierten Bussignale in die einzelnen Frequenzbänder (18) aufteilt und die den einzelnen Frequenzbändern (18) zugeordneten Daten der Schnittstelleneinheit (24) zuführt.
- eine Schmalband-Demodulationseinheit (44), die den Datenstrom der Filterbank-Analyseeinheit (38, 40) demoduliert und die Nutzdaten der Schnittstelleneinheit (24) zuführt.

2. Bussystem nach Anspruch 1, **dadurch gekennzeichnet, dass** 2ⁿ (n=1 bis 6) Frequenzbänder (18) vorgesehen sind.

3. Bussystem nach Anspruch 2, **dadurch gekennzeichnet, dass** jedes zweite Frequenzband (18) verwendet wird.

4. Bussystem nach Anspruch 1, **dadurch gekennzeichnet, dass** zwischen dem Digital-Analog-Wandler (26) und der Buskoppeleinheit (30) ein erstes analoges Tiefpassfilter angeordnet ist.

5. Bussystem nach Anspruch 1, **dadurch gekennzeichnet, dass** zwischen der der Buskoppeleinheit (30) und dem Analog-Digital-Wandler (34) ein zweites analoges Tiefpassfilter angeordnet ist.

6. Bussystem nach Anspruch 1, **dadurch gekennzeichnet, dass** übertragungsseitig der Buskoppeleinheit (30) eine Treibereinheit (28) vorgeschaltet ist.

7. Bussystem nach Anspruch 1, **dadurch gekennzeichnet, dass** in der Schmalbandmodulationseinheit (42) die Datenkodierung mittels Quadratur-Amplitudenmodulation erfolgt.

8. Bussystem nach Anspruch 1. **dadurch gekennzeichnet, dass** das digitale Kommunikationsprotokoll IEEE 802.3 (Ethernet), ARINC-429, MIL-STD-1553 oder CAN ist.

9. Bussystem nach Anspruch 1, **dadurch gekennzeichnet, dass** 8 Frequenzbänder mit Mittenfrequenzen von n* 0,625 MHz (n = 1..7) vorgesehen sind.

10. Bussystem nach Anspruch 1, **dadurch gekennzeichnet, dass** die galvanische Kopplung in der Buskoppeleinheit (30) ausgeführt induktiv ist.

11. Verwendung des Bussystems nach einem der vorherigen Ansprüche in einem Luftfahrzeug.

## Claims

1. A bus system (10) for connecting a number of data processing units (20) via a bus (14) consisting of two signal lines, wherein
- the bus (14) is acted upon by analogue signals lying within several non-overlapping frequency bands (18);
- each data processing unit (20) is coupled to the bus (14) via a modem unit (12),
**characterised in that** each data processing unit (20) has a frequency band (18) with a centre frequency assigned to it, and the modem unit (12) comprises the following components:
- an interface unit (24) to which the data processing unit (20) can be connected and communicate with the same by means of a digital communication protocol (e.g. IEEE 802.3);
- a narrow-band modulation unit (42), which converts the user data stream into a signal, which is transferable via the frequency bands (18);
- a filter-bank synthesis unit (36), which as a polyphase filter bank converts the data of the interface unit (24) to the centre frequency assigned to the data processing unit (20) and suppresses interferences between adjacent frequency bands;
- a digital/analogue converter (26), which converts the signal of the filter-bank synthesis unit (36) into an analogue signal;
- a bus coupling unit (30), in order to couple the signal of the digital/analogue converter (26) to be transferred, into the bus (14) in a galvanically isolated manner and to decouple signals received from the bus (14);
- an analogue/digital converter (34), which digitises the bus signals received from the bus coupling unit (30);
- a filter bank analysis unit (38, 40), which as a polyphase filter-bank divides the digitised bus signals into individual filter bands (18) and supplies the data assigned to the individual frequency bands (18) to the interface unit (24);
- a narrow-band demodulation unit (44), which demodulates the data stream of the filter-bank analysis unit (38, 40) and the supplies the user data to the interface unit (24).

2. The bus system according to claim 1, **characterised in that** 2ⁿ (n=1 to 6) frequency bands (18) are provided.

3. The bus system according to claim 2, **characterised in that** each second frequency band (18) is used.

4. The bus system according to claim 1, **characterised in that** a first analogue low-pass filter is arranged between the digital/analogue converter (26) and the bus coupling unit (30).

5. The bus system according to claim 1, **characterised in that** a second analogue low-pass filter is arranged between the bus coupling unit (30) and the analogue/digital converter (34).

6. The bus system according to claim 1, **characterised in that** a driver unit (28) is arranged upstream of the bus coupling unit (30) on the transfer side.

7. The bus system according to claim 1, **characterised in that** data encoding takes place in the narrow-band modulation unit (42) by means of quadrature amplitude modulation.

8. The bus system according to claim 1, **characterised in that** the digital communication protocol is IEEE 802.3 (Ethernet), ARINC-429, MIL-STD-1553 or CAN.

9. The bus system according to claim 1, **characterised in that** 8 frequency bands with centre frequencies of n * 0.625 MHz (n=1.7) are provided.

10. The bus system according to claim 1, **characterised in that** the galvanic coupling taking place in the bus coupling unit (30) is inductive.

11. A use of the bus system according to one of the preceding claims in an aircraft.

## Revendications

1. Système de bus (10) pour relier plusieurs unités de traitement de données (20) par l'intermédiaire d'un bus (14) constitué de deux lignes de signaux, dans lequel
- le bus (14) est sollicité avec des signaux analogiques, qui sont situés dans plusieurs bandes de fréquence (18) ne se superposant pas ;
- chaque unité de traitement de données (20) est couplée via une unité de modem (12) avec le bus (14) ;
**caractérisé en ce que** chaque unité de traitement de données (20) est affectée à une bande de fréquence (18) avec une fréquence moyenne, et l'unité de modem (12) présente le composant suivants :
- une unité d'interface (24), qui peut être reliée avec l'unité de traitement de données (20) et communique avec celle-ci au moyen d'un protocole de communication numérique (par ex. IEEE 802.3) ;
- une unité de modulation à bande étroite (42), qui convertit le flux de données utiles en un signal, qui peut être transmis via les bandes de fréquence (18) ;
- une unité de synthèse de banc de filtre (36), qui convertit en tant que banc de filtre polyphasé les données de l'unité d'interface (24) à la fréquence moyenne affectée à l'unité de traitement de données (20) et supprime les interférences entre des bandes de fréquence voisines ;
- un convertisseur numérique à analogique (26), qui convertit le signal de l'unité de synthèse de banc de filtre (36) en un signal analogique ;
- une unité de couplage de bus (30), pour coupler de manière isolée galvaniquement le signal à transmettre du convertisseur numérique à analogique (26) dans le bus (14) et découpler les signaux du bus (14) reçus ;
- un convertisseur analogique à numérique (34), qui numérise les signaux de bus reçus provenant de l'unité de couplage de bus (30) ;
- une unité d'analyse de banc de filtre (38, 40), qui divise en tant que banc de filtre polyphasé les signaux de bus numérisés dans les bandes de fréquence individuelles (18) et alimente les données affectées aux bandes de fréquence individuelles (18) dans l'unité d'interface (24) ;
- une unité de démodulation à bande étroite (44), qui démodule le flux de données de l'unité d'analyse de banc de filtre (38, 40) et alimente les données utiles dans l'unité d'interface (24).

2. Système de bus selon la revendication 1, **caractérisé en ce que** 2ⁿ (n=1 à 6) bandes de fréquence (18) sont prévues.

3. Système de bus selon la revendication 2, **caractérisé en ce que** chaque deuxième bande de fréquence (18) est utilisée.

4. Système de bus selon la revendication 1, **caractérisé en ce que** entre le convertisseur numérique à analogique (26) et l'unité de couplage de bus (30) un premier filtre passe-bas analogique est disposé.

5. Système de bus selon la revendication 1, **caractérisé en ce que** entre l'unité de couplage de bus (30) et le convertisseur analogique à numérique (34) un deuxième filtre passe-bas analogique est disposé.

6. Système de bus selon la revendication 1, **caractérisé en ce que** du côté de transmission de l'unité de couplage de bus (30) une unité d'attaque (28) est branché en amont.

7. Système de bus selon la revendication 1, **caractérisé en ce que** dans l'unité de modulation à bande étroite (42) le codage de données a lieu avec une modulation d'amplitude en quadrature.

8. Système de bus selon la revendication 1, **caractérisé en ce que** le protocole de communication numérique est IEEE 802.3 (Ethernet), ARINC-429, MIL-STD-1553 ou CAN.

9. Système de bus selon la revendication 1, **caractérisé en ce que** 8 bandes de fréquences avec des fréquences moyennes de n*0,625 mHz (n=1, 7...) sont prévues.

10. Système de bus selon la revendication 1, **caractérisé en ce que** le couplage galvanique dans l'unité de couplage de bus (30) est conçu de manière inductive.

11. Utilisation du système de bus selon une des revendications précédentes dans un avion.
